# EUROPÄISCHE PATENTSCHRIFT

(11) **EP 4 212 748 B1**
(45) Veröffentlichungstag und Bekanntmachung des Hinweises auf die Patenterteilung: **06.11.2024**
(21) Anmeldenummer: 23150846.6
(22) Anmeldetag: 10.01.2023
(51) Int. Cl.: F16C 19/22, F16C 33/51, F16C 33/46, F16C 33/54, F16C 33/56, F16C 33/66

(54) **KÄFIGSEGMENT FÜR EINEN SEGMENTKÄFIG**
CAGE SEGMENT FOR A SEGMENTAL CAGE
SEGMENT DE CAGE POUR UNE CAGE SEGMENTÉE

(30) Priorität: 13.01.2022 DE 102022200326
(43) Veröffentlichungstag der Anmeldung: 19.07.2023
(73) Patentinhaber: Aktiebolaget SKF, 415 50 Göteborg (SE)
(72) Erfinder: Beyfuss, Berthold, 97535 Wasserlosen-Kaisten (DE); Friedrich, Hans-Jürgen, 97486 Königsberg-Römershofen (DE); Radina, Alfred, 97711 Poppenlauer (DE); Soellner, Maximilian, 97494 Bundorf (DE); Schierling, Jonas, 97437 Hassfurt (DE); Kemmer, Martin, 97440 Werneck (DE)
(74) Vertreter: Kuhstrebe, Jochen

(56) Entgegenhaltungen:
- EP-A1- 4 105 506
- DE-A1- 102008 034 922
- DE-A1- 102013 218 286
- JP-A- 2013 061 076
- US-A1- 2002 081 053

## Beschreibung

Vorliegende Erfindung betrifft ein Käfigsegment gemäß Patentanspruch 1. Vorliegende Erfindung betrifft des Weiteren ein Wälzlagerkäfig mit einer Mehrzahl von Käfigsegmenten gemäß Patentanspruch 10.

Wälzkörper in Wälzlager können beispielsweise durch Wälzlagerkäfige geführt und gehalten werden, wie zum Beispiel aus den Dokumenten DE 10 2008 034922 A1 und EP 4 105 506 A1 bekannt. Letzteres ist eine europäische Patentanmeldungen, deren Anmeldetag vor dem Anmeldetag der vorliegenden Schrift liegt und die nachveröffentlicht wurde. Dabei kann ein Teil des Wälzlagerkäfigs auch als Abstandshalter zwischen den Wälzkörpern dienen. Abhängig von der Größe der Wälzkörper kann dafür gerade in Zonen, in denen die Wälzkörper Kontakt mit dem Wälzlagerkäfig haben, eine gewisse Materialstärke beim Wälzlagerkäfig notwendig sein, um sowohl den Abstand zwischen den Wälzkörpern zu kompensieren als auch, insbesondere bei großen Wälzkörpern, dem Gewicht eines Wälzkörpers standhalten zu können. Dies kann nicht nur im Betrieb des Wälzlagers notwendig sein, sondern auch bei dem Zusammenbau des Wälzlagers.

Es ist bekannt, dass Wälzlagerkäfige zum einen aus Metall durch verschiedene Herstellungsverfahren und zum anderen aus einem Kunststoff, beispielsweise durch ein Spritzgussverfahren, hergestellt werden können. Aufgrund des Temperaturverhaltens und der benötigten Festigkeit des Materials kann es notwendig sein, insbesondere einen glasfaserverstärkten Kunststoff, wie zum Beispiel glasfaserverstärktes PEEK, zu verwenden. Allerdings können gerade bei Großlagern Wälzlagerkäfige aus Kunststoff allein schon durch die benötigten Materialmengen, insbesondere bei Kunststoffen mit einem hohen Kilogrammpreis, sehr teuer werden.

Metallkäfige, insbesondere für größere Wälzlager, werden meist gefertigt, indem Vollmaterial zunächst gewalzt und dann spanend weiterbearbeitet wird. Dabei ist den bekannten Verfahren gemein, dass sie einerseits einen hohen Materialeinsatz erfordern, und anderseits eine Kombination von mehreren, zum Teil aufwendigen Herstellungsverfahren mit unterschiedlichen Werkzeugmaschinen erfordern, so dass die Herstellung aufwendig und/oder kostenintensiv sein kann. Insbesondere für Wälzkörpern mit einem großen Gewicht kann eine großer Materialdicke notwendig sein, die jedoch zur Herstellung Wälzkörperkontaktzonen aufgrund der notwendigen hohen Kräfte schwer umzuformen ist.

Es ist deshalb Aufgabe vorliegender Erfindung, ein Käfigsegment für einen Wälzlagerkäfig, auch für große Wälzlager, bereitzustellen, das auch großen Wälzkörpergewichten standhalten und dennoch einfach und kostengünstig hergestellt werden kann.

Diese Aufgabe wird durch eine ein Käfigsegment gemäß Patentanspruch 1 gelöst.

Im Folgenden wird ein Käfigsegment für einen Segmentkäfig, insbesondere für Großwälzlager, bereitgestellt, wobei das Käfigsegment eine Tasche bildet, die dazu geeignet ist, zumindest einen Wälzkörper aufzunehmen. Das Wälzlager kann insbesondere ein Rollenlager sein, d.h. ein Wälzlager mit rollenförmigen Wälzkörpern, wie zum Beispiel Kegelrollen, Zylinderrollen, Tonnen, Nadeln, und dergleichen.

Weiterhin weist das Käfigsegment zumindest eine Ausnehmung auf, die dazu ausgelegt ist, ein Einlageelement aufzunehmen, wobei das Einlageelement verliersicher in der Ausnehmung befestigbar ist. Die zumindest eine Ausnehmung kann sich beispielsweise durch die gesamte Wanddicke des Käfigsegments erstrecken. Alternativ kann sich die Ausnehmung auch nur teilweise durch die Wanddicke des Käfigsegments erstrecken und beispielsweise als eine Art Sackloch ausgebildet sein.

Bevorzugt können gängige Fügeverfahren verwendet werden, um das Einlageelement in der zumindest einen Ausnehmung verliersicher zu befestigen. Beispielsweise kann das zumindest eine Einlageelement in der zumindest einen Ausnehmung formschlüssig, kraftschlüssig und/oder stoffschlüssig befestigt sein. Ferner kann das Einlageelement lösbar oder unlösbar in der zumindest einen Ausnehmung befestigbar sein. Beispielsweise kann das Einlageelement durch Einklipsen, Kleben, Umspritzen, Einspritzen und/oder Schweißen befestigt werden.

Durch die Verwendung von einem Käfigsegment und einem, insbesondere separaten, Einlageelement kann im Vergleich zu einem herkömmlichen Käfigsegment, insbesondere aus Kunststoff, das Käfigsegment dünner gestaltet werden, da jegliche Abstandsunterschiede zwischen den Wälzkörpern durch das Einlageelement ausgeglichen werden können. Dies hat neben einer Gewichts- und Materialeinsparung den weiteren Vorteil, dass durch das dünnere Käfigsegment gerade bei großen Wälzlagern mehr Wälzkörper in dem Wälzlager untergebracht werden können, wodurch eine Leistungsfähig und/oder eine Lebensdauer des Wälzlagers erhöht werden kann. Ferner ist das Käfigsegment durch die Materialeinsparung gegenüber einem aus dem Vollen gefräster einteiliger Käfig oder einem Segmentkäfige aus PEEK-Kunststoff günstiger, da zum einen der Materialeinsatz geringer ist und zum anderen der Materialausnutzungsgrad höher ist als bei herkömmlichen Wälzlagerkäfigen.

Bevorzugt weist das Käfigsegment zumindest ein Seitenelement und zumindest ein Stegelement auf, wobei die zumindest eine Ausnehmung in dem Seitenelement und/oder dem Stegelement angeordnet ist. Beispielsweise kann, falls die Ausnehmung zumindest in einem Stegelement gebildet ist, das Einlageelement zum Führen eines Wälzkörpers ausgebildet sein. Außerdem kann das Einlegeelement dazu ausgebildet sein, mit dem Wälzkörper in Kontakt zu kommen. Insbesondere wird ermöglicht, dass unterschiedliche Anforderungen an die Funktion und/oder Beschaffenheit eines Teils des Käfigsegments auf das Käfigsegment selbst und das Einlageelement aufgeteilt werden können. Dabei kann insbesondere das Käfigsegment als Rahmen ausgebildet sein, der einfach und günstig, beispielsweise aus Metallblech herstellbar ist, wohingegen das Einlageelement dazu ausgebildet sein kann, die Anforderungen an eine Wälzkörperkontaktzone zu erfüllen und auch großen Wälzkörpergewichten standhalten kann.

Bevorzugt ist eine Dicke des Einlageelements verschieden von einer Dicke des Käfigsegments. Dadurch kann vorteilhafterweise ein Abstand zwischen dem Wälzkörper und dem Käfigsegment ausgeglichen werden. Beispielsweise kann, wenn das Einlageelement an einem Seitenelement des Käfigsegments angeordnet ist, eine Länge des Wälzkörpers ausgeglichen werden, und wenn das Einlageelement an einem Stegelement, d.h. an einer umfänglichen Wälzkörperanlagefläche, angeordnet ist, kann ein Durchmesser des Wälzkörpers ausgeglichen werden. Dadurch kann zum Beispiel ein standardisiertes Käfigsegment für unterschiedlich große Wälzkörper verwendet werden, so dass es nicht notwendig ist, für jede Wälzkörpergröße ein entsprechendes Käfigsegment vorzusehen. Stattdessen kann der Unterschied in den Geometrien zwischen dem Wälzkörper und dem Käfigsegment durch das Einlageelement ausgeglichen werden. Insbesondere kann dadurch auch auf schnelle und einfache Weise ein Prototyp hergestellt werden.

Gemäß einer weiteren bevorzugten Ausführungsform hat das Einlageelement eine Form, die zur Führung des Wälzkörpers und/oder des Käfigsegments geeignet ist. Beispielsweise kann das Einlageelement an einer Seite, die der Tasche zugewandt ist, und/oder an einer Seiter, die der Tasche abgewandt ist, im Bereich der Wälzkörperanlagefläche mit einer von der des in der Tasche des Käfigsegments aufnehmbaren Wälzkörpers abhängigen Form und/oder mit einer Strukturierung versehen sein. Dadurch kann vorteilhafterweise ein Kontakt zwischen dem Wälzkörper und dem Einlageelement verbessert werden, indem beispielsweise eine Reibung zwischen dem Einlageelement reduziert und/oder eine Führung des Wälzkörpers verbessert wird.

Bevorzugt kann das Einlageelement als Schmiermittelspeicher ausgebildet sein, wobei vorzugsweise die Oberfläche des Einlageelements mit einer Strukturierung versehen ist, und/oder wobei vorzugsweise das Einlageelement aus einem Festschmierstoffmaterial hergestellt ist. Beispielsweise kann das Einlageelement aus einem schwammartigen Material, einem porenaufweisenden Material und/oder einem gesinterten Material hergestellt sein, das ferner dazu ausgebildet sein kann, ein Schmiermittel, beispielsweise in seinen Poren, zu speichern. Ferner kann das Einlageelement zumindest eine erste Zone und eine zweite Zone aufweisen, wobei sich die Zonen in zumindest einer Eigenschaft unterscheiden. Beispielsweise kann eine Zone dazu ausgebildet sein, Schmiermittel zu speichern, und eine weitere Zone kann als Dämpfungselement ausgebildet sein.

Ferner kann das Einlageelement auch einem abriebfesten Stoff hergestellt sein. Beispielsweise kann das Einlageelement aus einem Metall, vorzugsweise aus Messing und/oder Stahl, und/oder aus einem Kunststoff hergestellt sein. Dies ermöglicht vorteilhafterweise ein Einlageelement mit einer hohen Festigkeit bereitzustellen. Alternativ oder zusätzlich kann das Einlageelement auch aus einem anderen Material, wie beispielsweise Holz, Filz, Keramik, etc., hergestellt sein. Bevorzugt kann das zumindest eine Einlageelement geschnitten, insbesondere lasergeschnitten, gestanzt und/oder genibbelt sein, wodurch wiederum nur geringe Werkzeugkosten entstehen.

Gemäß einer weiteren bevorzugten Ausführungsform ist das Einlageelement als Dämpfungselement ausgebildet, wobei vorzugsweise das Einlageelement aus einem elastischen Material hergestellt ist. Beispielsweise kann das Einlageelement aus einem harten abriebfesten Schaumstoff sein. Dies ermöglicht Stöße und/oder Schläge auf den Wälzkörper zu reduzieren, da kein Stahl-auf-Stahl Kontakt zustande kommt. Dadurch kann vorteilhafterweise, insbesondere bei großen und/oder schweren Wälzkörpern, verhindert werden, dass benachbarte Wälzkörper und/oder das Käfigsegment beschädig werden, da Materialabplatzer reduziert werden können.

Bevorzugt ist die zumindest eine Ausnehmung als eine Aussparung oder einer Ausklinkung ausgebildet. Bei einer Aussparung handelt es sich insbesondere um eine Ausnehmung, die durch die gesamte Wanddicke der Käfigsegment hindurchgeht, wobei das Material des Käfigsegment einen geschlossenen Rahmen um die Aussparung bildet. Im Gegensatz dazu bildet bei einer Ausklinkung das Material keinen geschlossenen Rahmen, so dass bei einer Ausklinkung das Einlageelement auch durch Einschieben in die Ausnehmung eingesetzt werden kann.

Gemäß der Erfindung ist Käfigsegment aus zumindest einem Blechbauteil mit zumindest einer Fügestelle zusammengefügt. Vorteilhafterweise kann die zumindest eine Fügestelle auch eine Einstellungsmöglichkeit bereitzustellen, sodass die Fügestelle dazu geeignet ist, Fertigungstoleranzen zu kompensieren. Bevorzugt liegt in einer Vorstufe der Fertigung das Käfigsegment als Bausatz vor, der aus einem oder mehreren, ebenen Metallblechbauteilen besteht, die dazu ausgelegt sind, zusammengesetzt zu sein, um das Käfigsegment auszubilden, wobei die zumindest eine Ausnehmung in zumindest einem der Metallblechbauteile des Käfigsegments, insbesondere in der Vorstufe der Fertigung, ausgebildet ist. Dadurch kann ein Materialeinsatz und/oder Fertigungsaufwand reduziert werden.

Bevorzugt ist das Einlageelement aus einem Metall, vorzugsweise aus Messing und/oder Stahl, und/oder aus einem Kunststoff hergestellt ist, wobei das zumindest eine Einlageelement vorzugsweise geschnitten, insbesondere lasergeschnitten, gestanzt und/oder genibbelt ist. Bei dem Metallblech kann es sich insbesondere um eine Metallblechplatte, eine Metallblechtafel, ein Metallblechband, insbesondere ein aufgewickeltes Metallblechband (ein sogenanntes Coil) oder dergleichen handeln. Metallblech kann einfach und kostengünstig, beispielsweise durch Schneiden, Laserschneider, Prägen, Tiefen und Biegen, bearbeitet und geformt werden. Ferner kann auf ein zerspanendes Bearbeitungsverfahren verzichtet werden, sodass auch ein Materialausnutzungsgrad erhöht werden kann.

Beispielsweise kann das eine oder die mehreren Metallblechbauteile des Käfigsegments aus einem Metallblech geschnitten, insbesondere lasergeschnitten, gestanzt und/oder genibbelt sein, so dass vorteilhafterweise nur geringe Werkzeugkosten entstehen. Mit anderen Worten werden die für das Käfigsegment benötigten Trennlinien in dem Metallblech mittels Schneiden, Stanzen, Nibbeln oder dergleichen vorgesehen. Das bedeutet, dass zunächst die Kontur des Käfigsegment in das Metallblech geschnitten oder gestanzt wird und anschließend die Form des Käfigsegments aus dem Metallblech gelöst wird. Dabei kann ein Laser, ein Stanzwerkzeug, eine Nibbelmaschine oder dergleichen verwendet werden. Vorteilhafterweise kann das Ausschneiden des Käfigsegments in eine automatisierte Fertigung in einer Montagelinie und/oder Montagezelle integriert werden.

Bevorzugt ist die zumindest eine Ausnehmung in zumindest einem der Metallblechbauteile des Käfigsegments, insbesondere in der Vorstufe der Fertigung, ausgebildet. Durch Ausbilden in der Vorstufe der Fertigung, das heißt, bevor das Käfigsegment zusammengesetzt ist, kann das Vorsehen der Ausnehmung vereinfacht werden. Auch kann die Positionierung des Funktionselements in der flachen Vorstufe des Käfigsegments präziser und schneller erfolgen.

Gemäß einem weiteren Aspekt wird ein Wälzlagerkäfig, insbesondere ein mehrteiliger Wälzlagerkäfig, mit einer Mehrzahl der oben beschriebenen Käfigsegmente bereitgestellt, wobei die Mehrzahl von Käfigsegmenten über ein Kopplungselement zumindest zeitweise verbindbar sind, wobei das Kopplungselement mit zumindest einem Verbindungselement zusammenwirkt. Beispielsweise können die Käfigsegment zu einem geschlossenen Käfig verbunden werden. Weiterhin kann beispielsweise jeder zweite Wälzkörper in einem Käfigsegment geführt und/oder von einem Käfigsegment umfasst sein. Alternativ kann auch ein Käfigsegment für jeweils einen Wälzkörper vorgesehen sein.

Gemäß noch einem weiteren Aspekt wird ein Wälzlager, insbesondere ein Großwälzlager, mit mindestens einem Innenring und mindestens einem Außenring vorgeschlagen, wobei zwischen dem Innenring und dem Außenring Wälzkörper angeordnet sind, wobei die Wälzkörper durch einen oben beschriebenen Wälzlagerkäfig gehalten werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine perspektivische Ansicht eines Käfigsegments gemäß einer ersten Ausführungsform;
Fig. 2: eine perspektivische Ansicht des Käfigsegments der Fig. 1,
Fig. 3: eine perspektivische Schnittansicht durch das Käfigsegment aus Fig. 1,
Fig. 4: eine perspektivische Ansicht des Einlagesegments der Fig. 1, und
Fig. 5: eine perspektivische Ansicht eines Wälzlagerkäfigs gemäß einer ersten Ausführungsform.

Im Folgenden werden gleiche oder funktionell gleichwirkende Elemente mit denselben Bezugszeichen gekennzeichnet.

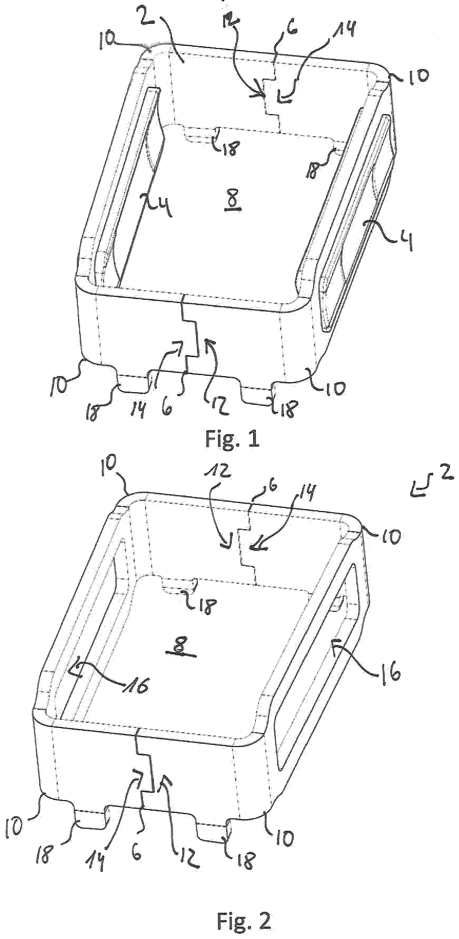

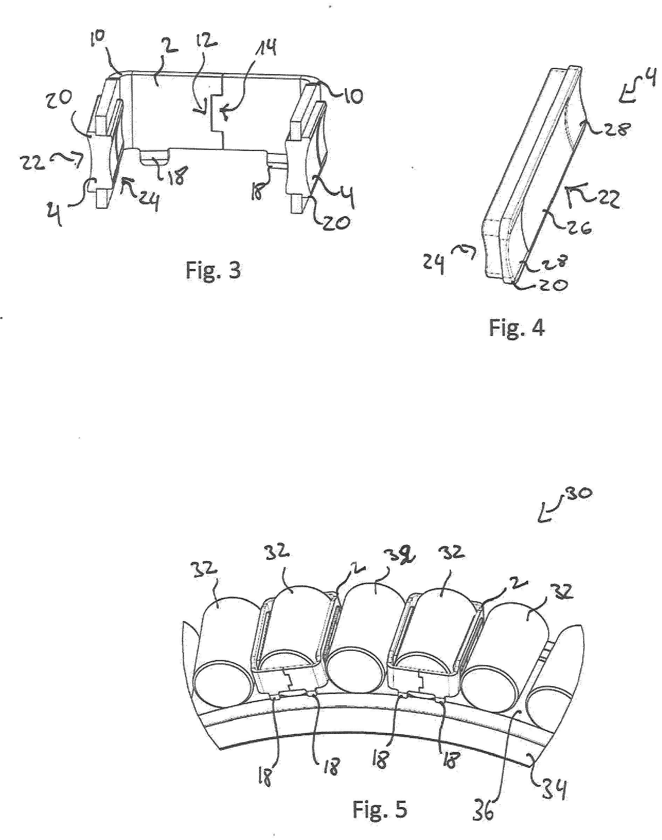

Mit Bezug auf die Fig. 1 bis 4 wird ein Käfigsegment 2 mit einem Einlageelement 4 gemäß einer ersten Ausführungsform gezeigt. Die Fig. 1 zeigt eine perspektivische Ansicht des Käfigsegments 2 mit dem Einlageelement 4, die Fig. 2 zeigt eine perspektivische Ansicht auf das Käfigsegment 2 der Fig. 1, die Fig. 3 zeigt eine perspektivische Schnittansicht durch das Käfigsegment der Fig. 1 und Fig. 4 zeigt eine perspektivische Ansicht auf das Einlageelement 4 der Fig. 1.

Das Käfigsegment 2 ist besteht aus zwei Metallblechbauteilen, die an zwei Fügestellen 6 zusammengefügt sind, um eine Taschen 8 zu bilden, die dazu eingerichtet ist, zumindest einen Wälzkörper aufzunehmen. Alternativ kann das Käfigsegment 2 auch nur eine Fügestelle 6 oder mehr als zwei Fügestellen 6, zum Beispiel vier Fügestellen, aufweisen. Das Käfigsegment 2 besteht in einer Vorstufe der Fertigung aus einem Bausatz mit ebenen Metallblechbauteilen.

Um das Käfigsegment 2 aus den Metallblechbauteilen zusammenzusetzen, werden die Metallblechbauteile jeweils an vorgegebenen Eckbereichen 10 gebogen und an den zwei Enden eines jeweiligen Metallblechbauteils zusammengefügt, wodurch die Fügestellen 6 gebildet werden. Das zusammengefügte Käfigsegment 2 bildet die Tasche 8, die dazu geeignet ist, zumindest einen Wälzkörper aufzunehmen, wobei die Eckbereiche 10 die Ecken des Käfigsegments 2 bilden. An den Enden der Metallblechbauteil sind ein erstes Ausrichtungselement 12 und ein zweites Ausrichtungselement 14, die komplementär zueinander sind, vorgesehen. Bei der in Fig. 1 bis 3 gezeigten Ausführungsform sind die Ausrichtungselemente 12, 14 rechteckige Verzahnungen. Es sind allerdings auch andere Formen, wie beispielsweise wellenförmige, dreieckige und/oder mehreckige, vorstellbar.

Die beiden Ausrichtungselemente 12, 14 können beispielsweise gestanzt und/oder geschnitten werden. Dabei sind die Ausrichtungselemente 12, 14 dazu ausgebildet, das Käfigsegment 2 an der Fügestelle 6 derart auszurichten, dass das Käfigsegment 2 zusammengefügt werden kann. Insbesondere sind die Ausrichtungselemente 12, 14 dazu ausgelegt, die aneinander gefügten Seiten in einer ersten Richtung, die senkrecht zu der Fläche der Tasche 8 ist, festzulegen und in zumindest einer zu der ersten Richtung senkrechten Richtung eine Einstellbarkeit bereitzustellen, die dazu geeignet ist, Fertigungstoleranzen und dergleichen zu kompensieren.

Ferner sind an dem Käfigelement 2 zwei Ausnehmungen 16 im Bereich einer Wälzkörperanlagefläche vorgesehen, die dazu ausgelegt sind, das Einlageelement 4 verliersicher aufzunehmen. Alternativ oder zusätzlich kann zumindest eine Ausnehmung 16 auch an einer Stirnfläche des Käfigsegments 2 vorgesehen sein. In den Fig. 1 bis 3 ist die Ausnehmung 16 als eine Aussparung gebildet, in die das Einlageelement 4 eingesetzt werden kann. Alternativ kann die Ausnehmung auch als einer Ausklinkung, in die das Einlageelement 4 eingeschoben werden kann, ausgebildet sein. In der Ausnehmung 16 kann das Einlageelement 4 mit einem gängigen Fügeverfahren, beispielsweise formschlüssig, kraftschlüssig und/oder stoffschlüssig befestigt werden. Bevorzugt werden die Ausnehmungen 16 bereits in der Vorstufe der Fertigung ausgebildet.

Des Weiteren sind an den einem Bord eines Wälzlagers zugewandten Flächen des Käfigsegments 2 Führungselemente 18 vorgesehen, die dazu ausgelegt sind, einen Wälzlagerkäfig an einem Bord des Wälzlagers zu führen. Dadurch kann vorteilhafterweise auf eine Führung des Wälzlagerkäfigs an eine Laufbahn des Wälzlagers verzichtet werden, wodurch die Lebensdauer der Laufbahnen erhöht werden kann.

In die Ausnehmungen ist, wie in Fig. 1 und 3 zu sehen ist, das Einlageelement 4 eingesetzt. Dazu weist das Einlageelement eine umlaufende Auskragung 20 auf, mit der das Einlageelement 4 an dem Käfigsegment 2 anliegt und dadurch in der Ausnehmung 16 gehalten wird. Selbstverständlich können auch andere Ausgestaltungen als eine umlaufende Auskragung 20 zum Einsatz kommen, um das Einlageelement in der Ausnehmung 16 zu halten. Beispielsweise können statt einer umlaufenden Auskragung 20 auch mehrere separaten Auskragungen vorgesehen sein. Ist die Ausnehmung 16 als eine Ausklinkung ausgeführt, kann auch eine Nut, entweder in dem Einlageelement oder der Ausnehmung vorgesehen sein, in die eine entsprechende Auskragung eingeschoben werden kann.

Weiterhin ist das Einlageelement 4 dazu ausgebildet, mit dem Wälzkörper in Kontakt zu kommen und beispielsweise den Wälzkörper in der Tasche 8 an einer gewünschten Position zu halten bzw. zu verhindern, dass das Käfigsegment 2 im Gebrauch radial nach außen wandert. Dazu sind die Flächen 22, 24 des Einlageelement 4, die im Gebrauch dem Wälzkörper zu gewandt sind, im Bereich der Wälzkörperanlagefläche mit einer Krümmung versehen. Zusätzlich oder alternativ können diese Fläche auch mit einer Strukturierung versehen sein, um beispielsweise eine Schmiermittelzufuhr an den Wälzkörper zu verbessen. Die Dicke des Einlageelements 4 unterscheidet sich von der Dicke des Käfigsegments 2, so dass vorteilhafterweise ein Abstand zwischen dem Wälzkörper und dem Käfigsegment ausgeglichen werden kann.

Das Einlageelement 4 ist bevorzugt aus einem abriebfesten Stoff hergestellt, wie beispielsweise aus einem Metall, vorzugsweise aus Messing und/oder Stahl, und/oder aus einem Kunststoff. Alternativ oder zusätzlich kann das Einlageelement 4 porös sein. Beispielsweise kann das Einlageelement 4 aus einem Guss- oder Sinterwerkstück hergestellt sein, so dass es aufgrund seiner Porosität Schmiermittel speichern kann und somit als Schmiermittelspeicher dient. Je nach Material des Einlageelements 4 kann das Einlageelement 4 auch dämpfende Eigenschaften haben und als Dämpfungselement, das Stöße und/oder Schläge auf den Wälzkörper reduziert, ausgebildet sein. Dazu kann das Einlageelement 4 aus einem harten abriebfesten Schaumstoff hergestellt sein. Bevorzugt kann das Einlageelement 4 geschnitten, insbesondere lasergeschnitten, gestanzt und/oder genibbelt sein, wodurch wiederum nur geringe Werkzeugkosten entstehen. Ferner hat das Einlageelement 4 eine erste Zone 26 und zwei zweite Zonen 28. Die beiden Zonen 26, 28 unterscheiden sich insbesondere in einer Materialeigenschaften voneinander. Beispielsweise ist die erste Zone 26 dazu ausgebildet, Schmiermittel zu speichern, und die zweiten Zonen 28 sind als Dämpfungselement ausgebildet.

Fig. 5 zeigt eine perspektivische Ansicht einen Ausschnitt eines Wälzlagerkäfigs 30, bei dem das Käfigsegment 2 der Fig. 1 verwendet wird. Der Wälzlagerkäfig 30 hat mehrere Käfigsegmente 1, wie voranstehend beschrieben, die beispielsweise über Kopplungselemente (nicht dargestellt) verbunden werden können. Wie beispielsweise in der Fig. 3 gezeigt ist, ist das Einlageelement 4 sowohl an einer der Tasche 8 zugewandten Fläche 24 als auch an einer der Tasche 8 abgewandten Fläche 22 ausgebildet, mit dem Wälzkörper 32 in Kontakt zu kommen. Daher wird bei dem Wälzlagerkäfig 30 jeder zweite Wälzkörper 32 in einer Tasche 8 des Käfigsegments 2 geführt, während die andere Hälfte der Wälzkörper 32 jeweils zwischen zwei Käfigsegmenten 2 geführt werden. Alternativ kann auch ein Käfigsegment 2 für jeweils einen Wälzkörper 32 vorgesehen sein. Die Wälzkörper 32 rollen auf einer Innenlaufbahn 36 eines Innenrings 34 und auf der Außenlaufbahn eines Außenrings (nicht gezeigt) eines Wälzlagers ab, um eine relative Rotation des Innenrings und des Außenrings zu ermöglichen.

Zusammenfassend wird, um den Materialeinsatz und den Fertigungsaufwand zu reduzieren, vorgeschlagen, eine Anordnung aus einem Käfigsegment 2 und einem separaten Einlageelement 4 zu verwenden. Dies ermöglicht das Käfigsegment 2 Vergleich zu einem herkömmlichen Käfigsegment, insbesondere aus Kunststoff, dünner zu gestalten, da jegliche Abstandsunterschiede zwischen den Wälzkörpern 32 durch das Einlageelement 4 ausgeglichen werden können. Dies hat neben einer Gewichts- und Materialeinsparung den weiteren Vorteil, dass durch das dünnere Käfigsegment 2 gerade bei großen Wälzlagern dennoch mehr Wälzkörper in dem Wälzlager untergebracht werden können, wodurch eine Leistungsfähig und/oder eine Lebensdauer des Wälzlagers erhöht werden kann. Ferner ist das Käfigsegment 1 durch die Materialeinsparung gegenüber einem aus dem Vollen gefräster einteiliger Käfig oder einem Segmentkäfige aus PEEK-Kunststoff günstiger, da zum einen der Materialeinsatz geringer ist und zum anderen der Materialausnutzungsgrad höher ist als bei herkömmlichen Wälzlagerkäfigen.

Das Käfigsegment 2 mit dem Einlageelement 4 ermöglicht, dass die unterschiedlichen Anforderungen, die an ein Segment gestellt werden, das einen Wälzkörper 32 aufnimmt, auf zwei Komponenten aufgeteilt werden können. Dabei kann insbesondere das Käfigsegment 2 als Rahmen ausgebildet sein, der einfach und günstig, beispielsweise aus Metallblech herstellbar ist, wohingegen das Einlageelement dazu ausgebildet sein kann, die Anforderungen an eine Wälzkörperkontaktzone zu erfüllen und auch großen Wälzkörpergewichten standhalten kann. Dadurch kann das Käfigsegment mit einem geringen Materialeinsatz und/oder einem hohen Materialausnutzungsgrad sowie mit einem relativ geringen Arbeitsaufwand und damit kostengünstig, insbesondere auch bei kleinen Stückzahlen, hergestellt werden.

### Bezugszeichenliste

- 2: Käfigsegment
- 4: Einlageelement
- 6: Fügestelle
- 8: Tasche
- 10: Eckbereich
- 12, 14: Ausrichtungselement
- 16: Ausnehmung
- 18: Führungselement
- 20: Auskragung
- 22, 24: Fläche
- 26,28: Zone
- 30: Wälzlagerkäfig
- 32: Wälzkörper
- 34: Innenring
- 36: Laufbahn

## Patentansprüche

1. Käfigsegment (2) für einen Segmentkäfig, insbesondere für Großwälzlager, wobei das Käfigsegment (2) eine Tasche (8) bildet, die dazu geeignet ist, zumindest einen Wälzkörper (32) aufzunehmen, wobei das Käfigsegment (2) zumindest eine Ausnehmung (16) aufweist, in der ein Einlageelement (4) aufgenommen ist, wobei das Einlageelement (4) verliersicher in der Ausnehmung (16) befestigt ist, **dadurch gekennzeichnet, dass** das Käfigsegment (2) aus zumindest einem Blechbauteil mit zumindest einer Fügestelle (6) zusammengefügt ist.

2. Käfigsegment (2) gemäß Anspruch 1, wobei das Käfigsegment zumindest ein Seitenelement und zumindest ein Stegelement aufweist, wobei die zumindest eine Ausnehmung (16) in dem Seitenelement und/oder dem Stegelement angeordnet ist.

3. Käfigsegment (2) gemäß Anspruch 1 oder 2, wobei eine Dicke des Einlageelements (4) verschieden von einer Dicke des Käfigsegments (2) ist.

4. Käfigsegment (2) gemäß einem der vorherigen Ansprüche, wobei das Einlageelement eine Form hat, die zur Führung des Wälzkörpers und/oder des Käfigsegments geeignet ist.

5. Käfigsegment (2) gemäß einem der vorherigen Ansprüche, wobei das Einlageelement (4) als Schmiermittelspeicher ausgebildet, wobei vorzugsweise die Oberfläche des Einlageelements mit einer Strukturierung versehen ist, und/oder wobei vorzugsweise das Einlageelement aus einem Festschmierstoffmaterial hergestellt ist.

6. Käfigsegment (2) gemäß einem der vorherigen Ansprüche, wobei das Einlageelement (4) als Dämpfungselement ausgebildet ist, wobei vorzugsweise das Einlageelement aus einem elastischen Material hergestellt ist.

7. Käfigsegment (2) gemäß einem der vorherigen Ansprüche, wobei die zumindest eine Ausnehmung (16) als eine Aussparung oder einer Ausklinkung ausgebildet ist.

8. Käfigsegment (2) gemäß Anspruch 7, wobei in einer Vorstufe der Fertigung das Käfigsegment (2) als Bausatz vorliegt, der aus einem oder mehreren, ebenen Metallblechbauteilen besteht, die dazu ausgelegt sind, zusammengesetzt zu sein, um das Käfigsegment (2) auszubilden, wobei die zumindest eine Ausnehmung (16) in zumindest einem der Metallblechbauteile des Käfigsegments (2) ausgebildet ist.

9. Käfigsegment (2) gemäß einem der vorherigen Ansprüche, wobei das Einlageelement (4) aus einem Metall, vorzugsweise aus Messing und/oder Stahl, und/oder aus einem Kunststoff hergestellt ist, wobei das zumindest eine Einlageelement (4) vorzugsweise geschnitten, insbesondere lasergeschnitten, gestanzt und/oder genibbelt ist.

10. Wälzlagerkäfig (30), insbesondere ein mehrteiliger Wälzlagerkäfig, mit einer Mehrzahl von Käfigsegmente (2) nach Anspruch 1 bis 9, wobei die Mehrzahl von Käfigsegmenten (1) über ein Kopplungselement zumindest zeitweise verbindbar sind, wobei das Kopplungselement mit zumindest einem Verbindungselement zusammenwirkt.

11. Verfahren zum Herstellen eines Käfigsegments (1) nach einem der Ansprüche 1 bis 9, wobei das Verfahren folgende Schritte umfasst
Bereitstellen des Käfigsegments (1), wobei das Käfigsegment (1) aus zumindest einem Blechbauteil ausgebildet ist,
Zusammenfügen des Käfigsegments (1) an zumindest einer Fügestelle (6),
Bereitstellen des Käfigsegments (1) mit zumindest einer Ausnehmung (16),
Bereitstellen zumindest einen Einlageelements (4),
Einsetzen des zumindest einen Einlageelements (4) in die zumindest eine Ausnehmung (16), und
Befestigen des zumindest einen Einlageelements (4) in der zumindest eine Ausnehmung (16).

## Claims

1. Cage segment (2) for a segment cage, in particular for large rolling bearings, wherein the cage segment (2) forms a pocket (8) which is suitable for receiving at least one rolling body (32), wherein the cage segment (2) has at least one clearance (16) in which an insert element (4) is received, wherein the insert element (4) is captively fastened in the clearance (16), **characterized in that** the cage segment (2) is assembled from at least one sheet-metal component by way of at least one joint (6).

2. Cage segment (2) according to Claim 1, wherein the cage segment has at least one lateral element and at least one web element, wherein the at least one clearance (16) is disposed in the lateral element and/or the web element.

3. Cage segment (2) according to Claim 1 or 2, wherein a thickness of the insert element (4) differs from a thickness of the cage segment (2).

4. Cage segment (2) according to one of the preceding claims, wherein the insert element has a shape which is suitable for guiding the rolling body and/or the cage segment.

5. Cage segment (2) according to one of the preceding claims, wherein the insert element (4) is designed as a lubricant reservoir, wherein the surface of the insert element is preferably provided with a structuring, and/or wherein the insert element is preferably produced from a solid lubricant material.

6. Cage segment (2) according to one of the preceding claims, wherein the insert element (4) is designed as a damping element, wherein the insert element is preferably produced from an elastic material.

7. Cage segment (2) according to one of the preceding claims, wherein the at least one clearance (16) is designed as a recess or a cutout.

8. Cage segment (2) according to Claim 7, wherein the cage segment (2) in a preliminary stage of manufacturing is present as a kit which consists of one or a plurality of flat sheet-metal components which are conceived to be assembled so as to form the cage segment (2), wherein the at least one clearance (16) is formed in at least one of the sheet-metal components of the cage segment (2).

9. Cage segment (2) according to one of the preceding claims, wherein the insert element (4) is produced from a metal, preferably from brass and/or steel, and/or produced from a plastics material, wherein the at least one insert element (4) is preferably cut, in particular laser-cut, punched and/or nibbled.

10. Rolling bearing cage (30), in particular a multipart rolling bearing cage, having a plurality of cage segments (2) according to Claim 1 to 9, wherein the plurality of cage segments (1) are able to be at least temporarily connected by a coupling element, wherein the coupling element interacts with at least one connecting element.

11. Method for producing a cage segment (1) according to one of Claims 1 to 9, wherein the method comprises the following steps
providing the cage segment (1), wherein the cage segment (1) is formed from at least one sheet-metal component,
joining the cage segment (1) at at least one joint (6),
providing the cage segment (1) with at least one clearance (16),
providing at least one insert element (4),
inserting the at least one insert element (4) into the at least one clearance (16), and
fastening the at least one insert element (4) in the at least one clearance (16).

## Revendications

1. Segment de cage (2) pour une cage segmentée, en particulier pour des roulements de grande taille, le segment de cage (2) formant une poche (8) qui est adaptée pour recevoir au moins un corps de roulement (32),
le segment de cage (2) présentant au moins un évidement (16) dans lequel est reçu un élément d'insertion (4), l'élément d'insertion (4) étant fixé dans l'évidement (16) de manière imperdable, **caractérisé en ce que** le segment de cage (2) est assemblé à partir d'au moins un composant en tôle avec au moins un point d'assemblage (6) .

2. Segment de cage (2) selon la revendication 1, dans lequel le segment de cage présente au moins un élément latéral et au moins un élément d'âme, ledit au moins un évidement (16) étant aménagé dans l'élément latéral et/ou l'élément d'âme.

3. Segment de cage (2) selon la revendication 1 ou la revendication 2, dans lequel une épaisseur de l'élément d'insertion (4) est différente d'une épaisseur du segment de cage (2).

4. Segment de cage (2) selon l'une des revendications précédentes, dans lequel l'élément d'insertion a une forme adaptée au guidage du corps de roulement et/ou du segment de cage.

5. Segment de cage (2) selon l'une des revendications précédentes, dans lequel l'élément d'insertion (4) est configuré comme un réservoir de lubrifiant, la surface de l'élément d'insertion étant de préférence pourvue d'une structuration, et/ou l'élément d'insertion étant de préférence réalisé en un matériau de lubrification solide.

6. Segment de cage (2) selon l'une des revendications précédentes, dans lequel l'élément d'insertion (4) est conçu comme un élément d'amortissement, l'élément d'insertion étant de préférence fabriqué en un matériau élastique.

7. Segment de cage (2) selon l'une des revendications précédentes, dans lequel ledit au moins un évidement (16) est réalisé sous la forme d'un évidement ou d'une encoche.

8. Segment de cage (2) selon la revendication 7, dans lequel, dans une étape préliminaire de fabrication, le segment de cage (2) se présente sous la forme d'un kit constitué par un ou plusieurs éléments plans en tôle métallique adaptés pour être assemblés afin de former la segment de cage (2), ledit au moins un évidement (16) étant formé dans au moins un des composants en tôle métallique du segment de cage (2).

9. Segment de cage (2) selon l'une des revendications précédentes, dans lequel l'élément d'insertion (4) est réalisé en un métal, de préférence en laiton et/ou en acier, et/ou en une matière plastique, ledit au moins un élément d'insertion (4) étant de préférence découpé, notamment découpé au laser, estampé et/ou gravé.

10. Cage de roulement (30), en particulier une cage de roulement en plusieurs parties, avec une pluralité de segments de cage (2) selon les revendications 1 à 9, les segments de cage de la pluralité de segments de cage (1) étant aptes à être reliés au moins temporairement par un élément de liaison, l'élément de liaison coopérant avec au moins un élément de liaison.

11. Procédé de fabrication d'un segment de cage (1) selon l'une des revendications 1 à 9, le procédé comprenant les étapes suivantes :
préparation du segment de cage (1), le segment de cage (1) étant réalisé à partir d'au moins un composant en tôle,
assemblage du segment de cage (1) en au moins un point d'assemblage (6),
aménager au moins un évidement (16) dans le segment de cage (1),
fourniture d'au moins un élément d'insertion (4),
insertion dudit au moins un élément d'insertion (4) dans ledit au moins un évidement (16), et
fixation dudit au moins un élément d'insertion (4) dans ledit au moins un évidement (16).
